# EUROPÄISCHE PATENTSCHRIFT

(11) **EP 2 092 316 B1**
(45) Veröffentlichungstag und Bekanntmachung des Hinweises auf die Patenterteilung: **15.03.2017**
(21) Anmeldenummer: 07822639.6
(22) Anmeldetag: 15.11.2007
(51) Int. Cl.: G01N 27/36

(54) **ELEKTRODE UND EINSTABMESSKETTE ZUR BESTIMMUNG ELEKTROCHEMISCHER POTENTIALE**
ELECTRODE AND SINGLE-ROD MEASURING CHAIN FOR DETERMINING ELECTROCHEMICAL POTENTIALS
ÉLECTRODE ET ÉLECTRODE COMBINÉE POUR LA DÉTERMINATION DE POTENTIELS ÉLECTROCHIMIQUES

(30) Priorität: 21.11.2006 DE 102006055221
(43) Veröffentlichungstag der Anmeldung: 26.08.2009
(73) Patentinhaber: Endress + Hauser Conducta GmbH+Co. KG, 70839 Gerlingen (DE)
(72) Erfinder: FRANZHELD, Reiner, 04736 Waldheim (DE); SCHOLZ, Katrin, 09627 Bobritzsch (DE); WUNDERLICH, Ingrid, 01445 Radebeul (DE)
(74) Vertreter: Andres, Angelika Maria
(86) Internationale Anmeldenummer: PCT/EP2007/062399
(87) Internationale Veröffentlichungsnummer: WO 2008/061934

(56) Entgegenhaltungen:
- EP-A- 1 172 648
- WO-A1-2007/118753
- DE-A1- 10 018 750
- DE-A1- 10 354 100
- JP-A- S59 108 950
- US-A- 3 676 319
- US-A- 4 162 211

## Beschreibung

Die vorliegende Erfindung betrifft eine Elektrode und eine Einstabmesskette zur Bestimmung elektrochemischer Potentiale, beispielsweise des pH-abhängigen Potentials, insbesondere eine Glaselektrode. Glaselektroden finden in dem obigen Anwendungsgebiet weiteste Verbreitung. Für die pH-Messung werden insbesondere so genannte Einstabmessketten mit einer pH-Glashalbzelle bzw. pH-Elektrode und einer Referenzhalbzelle bzw. Referenzelektrode, die ein konstantes Referenzpotential bereitstellt, eingesetzt. Zur Bildung des Referenzpotentials kommt vorwiegend ein Ag/AgCI-Körper in einer KCI-Lösung konstanter Konzentration zum Einsatz.

Gängige Einstabmessketten weisen im wesentlichen zwei konzentrische Glaszylinder auf, die in einem ersten axialen Endabschnitt miteinander verschmolzen sind, wobei der innere Zylinder an dem ersten Endabschnitt gewöhnlich eine pH-Glasmembran trägt und mit einem Puffer gefüllt ist, die Ringkammer zwischen dem inneren und dem äußeren Zylinder die KCI-Lösung enthält, und der äußere Zylinder in dem ersten axialen Endabschnitt oder in einem axial daran angrenzenden Abschnitt ein poröses Diaphragma aufweist, durch welches eine Elektrolytbrücke zum umgebenden Messmedium hergestellt wird. Sowohl aus dem inneren Zylinder als auch aus der Ringkammer wird jeweils ein metallischer Leiter herausgeführt um das pH-Potential bzw. das Referenzpotential abzuleiten.

Eine konstruktive Anforderung besteht darin, die Ringkammer und den inneren Zylinder in einem zweiten axialen Endabschnitt, der dem ersten axialen Endabschnitt gegenüber liegt, dicht zu verschließen, ohne die Ableitung der Potentiale zu beeinträchtigen. Die Dichtigkeit des Verschlusses muss dabei sowohl hohen Temperaturen, beispielsweise > 130°C beim Autoklavieren, als auch hohen Drücken, beispielsweise bis etwa 16 bar oder mehr gewährleistet sein.

Herkömmlich werden als metallische Leiter Drähte in Glas eingeschmolzen oder durch mehr oder weniger geeignete Materialien in Durchführungen verklebt und vergossen. Diese Durchführungen können nur mit großem Aufwand dicht hergestellt werden.

Die EP 1 172 648 zeigt eine Elektrode, die einen ersten Glaskörper umfasst, in dem einer erste Kammer ausgebildet ist. Die erste Kammer ist mit einem ersten Elektrolyten gefüllt. Der Glaskörper umfasst weiter eine zweite Kammer, die mit einem zweiten Elektrolyten gefüllt ist. Die zweite Kammer ist nach oben durch einen Verschluss verschlossen und steht über eine Öffnung mit dem mit dem ersten Elektrolyten in Kontakt. Es ist ein Elektrodenelement vorgesehen, das zumindest teilweise mit dem zweiten Elektrolyten in Kontakt steht und über den zweiten Elektrolyten, die Öffnung, den ersten Elektrolyten und ein Diaphragma, mit dem zu messenden Medium in Kontakt steht.

Aufgabe der Erfindung ist daher, potentiometrische Elektroden bereitzustellen, welche die Nachteile des Stands der Technik überwinden.

Die Aufgabe wird erfindungsgemäß gelöst durch die Elektrode gemäß des unabhängigen Patentanspruchs 1.

Die erfindungsgemäße Elektrode umfasst
mindestens einen ersten Glaskörper, in dem mindestens eine erste Kammer ausgebildet ist,
mindestens einen ersten Elektrolyten, der in der ersten Kammer angeordnet ist,
mindestens ein erstes Potential bildendes Element, welches in der Kammer angeordnet ist, und unter Kontaktierung des ersten Elektrolyten ein erstes Potential ausbildet,
mindestens ein erstes Verschlusselement, welches in der ersten Kammer unter Einschluss des ersten Elektrolyten und des ersten Potential bildenden Elements axial fixiert ist und diese dicht verschließt, dadurch gekennzeichnet, dass das erste Verschlusselement leitfähig ist, das Verschlusselement einen leitfähigen Verschlusskörper umfasst, der ein Elastomer aufweist, das erste Potential bildende Element das erste Verschlusselement leitend kontaktiert, und
dass die Elektrode weiterhin mindestens einen ersten elektrischen Leiter umfasst, welcher das erste Verschlusselement auf der dem ersten Elektrolyten abgewandten Seite des ersten Verschlusselements elektrisch kontaktiert.

Die erfindungsgemäße Elektrode kann eine einzelne pH-Elektrode oder eine einzelne Referenzelektrode sein. Gleichermaßen können die pH-Elektrode und/oder die Referenzelektrode einer Einstabmesskette als erfindungsgemäße Elektrode gestaltet sein.

In einer ersten Ausgestaltung der Erfindung ist die Elektrode eine pH-Elektrode.

Der erste Glaskörper kann gemäß der ersten Ausgestaltung der Erfindung beispielsweise ein zylindrisches Rohr umfassen dessen erstes axiales Ende unter Bildung der ersten Kammer mit einer pH-Glasmembran verschlossen ist. Der erste Elektrolyt umfasst einen pH-Puffer, der beispielsweise KCl enthalten kann.

Das erste Potential bildende Element umfasst dann beispielsweise einen AgCI-Vorrat, der von dem Elektrolyten bzw. pH-Puffer benetzt wird und in elektrisch leitender Verbindung mit dem elektrisch leitenden Verschlusselement steht.

In einer derzeit bevorzugten Ausgestaltung umfasst das Potential bildende Element einen leitfähigen Elementkörper der ein poröses, insbesondere offenporiges, Elastomer aufweist, dessen Poren den Elektrolyten bzw. pH-Puffer und AgCl enthalten, und der das Verschlusselement elektrisch kontaktiert. In das Elastomer sind beispielsweise Silberpartikel, silberhaltige Partikel oder mit Ag beschichtete Glaspartikel eingebettet, um eine ausreichende elektrische Leitfähigkeit des Körpers zu erzielen.

Das Verschlusselement umfasst einen leitfähigen Verschlusskörper, der ein Elastomer aufweist, in welches gegebenenfalls die genannten Partikel mit silberhaltigen Oberflächen eingebettet sind, um den elektrisch Körper leitfähig zu machen. Der Verschlusskörper kann beispielswiese vom zweiten axialen Ende des zylindrischen Glaskörpers her in die Öffnung des Glaskörpers eingepresst sein, um diese zu verschließen. Das Verschlusselement ist dabei durch radiale Einspannkräfte im Klemmsitz in seiner axialen Position hinreichend fixiert. Der Verschlusskörper kann je nach Ausgestaltung der pH Elektrode ein massiver Stopfen oder ein ringförmiger Körper bzw. ein O-Ring sein.

Ein O-Ring ist dann erforderlich, wenn in dem zylindrischen Glaskörper noch eine Temperatursonde angeordnet ist, die sich von dem zweiten Endabschnitt des zylindrischen Glaskörpers in Richtung der pH-Glasmembran erstreckt.

In einer Weiterbildung der Erfindung ist der Elementkörper einstückig mit dem Verschlusskörper ausgebildet.

In einer anderen Ausgestaltung der Erfindung umfasst das Verschlusselement einen Klebstoff, der durch Einbettungen von Silberpartikeln, silberhaltigen Partikeln bzw. mit Silber beschichteten Glaspartikeln leitfähig gemacht ist.

Geeignete Elastomere bzw. Dichtmassen, insbesondere Silikonmassen mit Silberzusätzen bzw. silberhaltigen Zusätzen zum Erzielen der erforderlichen Leitfähigkeit sind beispielsweise von Laird-Technologies in Rosenheim erhältlich.

Die Prinzipien der obigen Ausgestaltungen der erfindungsgemäßen Elektrode können sinngemäß auf Referenzhalbzellen übertragen werden. Dann ist anstelle der pH-Glasmembran in einem ersten Endabschnitt des zylindrischen Glaskörpers ein poröses Diaphragma zur Realisierung des so genannten Stromschlüssels vorgesehen. Der Elektrolyt umfasst entsprechend der angestrebten Funktion einen Referenzelektrolyten, beispielsweise eine 3 molare KCI-Lösung.

Gleichermaßen gelten die obigen Ausführungen für eine so genannte Einstabmesskette, welche eine pH-Elektrode und eine koaxial angeordnete Referenzelektrode umfasst, wobei der zylindrische Glaskörper der Referenzelektrode den zylindrischen Glaskörper der pH-Elektrode unter Ausbildung einer Ringkammer umschließt, wobei die Ringkammer im Bereich des ersten Endabschnitts beispielsweise durch Verschmelzen der beiden Glaskörper verschlossen ist. Ein Referenzelektrolyt und ein ein Referenzpotential bildendes Element ist in der Ringkammer angeordnet. Mindestens eine der Kammern, also die Kammer der pH-Elektrode oder die Ringkammer der zweiten Elektrode sind mit einem zuvor beschriebenen leitfähigen Verschlusskörper verschlossen. Vorzugsweise sind jedoch beide Kammern mit einem der zuvor beschriebenen leitfähigen Verschlusskörper verschlossen.

Die Erfindung wird nun anhand der in den Zeichnungen dargestellten Ausführungsbeispiele erläutert. Es zeigt:
Fig. 1: einen Längsschnitt durch ein erstes Ausführungsbeispiel einer erfindungsgemäßen pH-Elektrode;
Fig. 2: einen Längsschnitt durch ein zweites Ausführungsbeispiel einer erfindungsgemäßen pH-Elektrode; und
Fig. 3: einen Längsschnitt durch ein Ausführungsbeispiel einer erfindungsgemäßen Einstabmesskette:

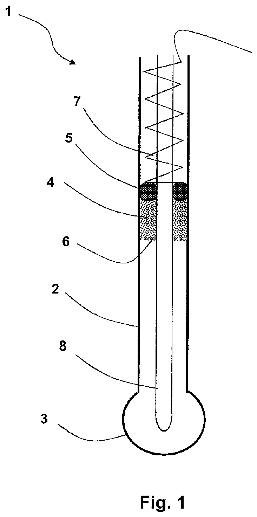

Die in Fig. 1 gezeigte pH-Elektrode 1 umfasst ein zylindrisches Glasrohr 2 dessen unteres Ende mit einer pH-Glasmembran 3 verschlossen ist. Das Glasrohr 2 und die pH-Glasmembran 3 umschließen ein Volumen, das mit einem KCI-haltigen pH-Puffer gefüllt ist.

Zur Ausbildung eines pH-abhängigen Potentials ist ein AgCI-Vorrat 4 vorgesehen, der Silberkörner bzw. Körner mit einer Silberoberfläche umfasst, die zumindest teilweise chloridiert sind. Der AgCl-Vorrat steht mit einem Verschlusselement 5, welches das Glasrohr 2 verschließt, in elektrisch leitendem Kontakt. Zur Fixierung der axialen Position des AgCI-Vorrats 4 ist eine axiale Barriere 6 in dem Glasrohr 2 vorgesehen, die für den pH-Puffer durchlässig ist, so dass dieser den AgCI-Vorrat benetzen kann. Die Barriere 6 kann beispielsweise eine ringförmige Siebplatte aus Glas oder Kunststoff umfassen.

Das Verschlusselement 5 umfasst in dieser Ausgestaltung einen elektrisch leitenden O-Ring der aus einem mit Silberpartikeln versetzten Elastomer gefertigt ist. Der O-Ring ist durch die radialen Einspannkräfte ausreichend in axialer Richtung fixiert.

Zum Ableiten des pH-abhängigen Potentials wird der O-Ring über eine Kontaktfeder kontaktiert, die gegen die dem AgCI-Vorrat abgewandte Stirnseite des O-Rings drückt. Die Kontaktfeder ist dabei so weit axial vorgespannt, dass ein elektrischer Kontakt auch bei Erschütterungen und Temperaturschwankungen bestehen bleibt, aber dass keine axiale Verschiebung des O-Rings durch die Kontaktfeder erfolgt.

Entlang der Achse der pH-Elektrode verläuft ein Glasschaft eines Temperaturfühlers 8, welcher die Temperatur der des pH-Puffers etwa im Zentrum des von der pH-Glasmembran eingeschlossenen Volumens erfasst. Aufgrund dieses Temperaturfühlers sind das Verschlusselement 5 und die axiale Barriere 6 ringförmig gestaltet. Wenn der Temperaturfühler entfällt, sind das Verschlusselement 5 und die axiale Barriere 6 entsprechend als massiver Stopfen bzw. durchgehende Siebplatte zu gestalten.

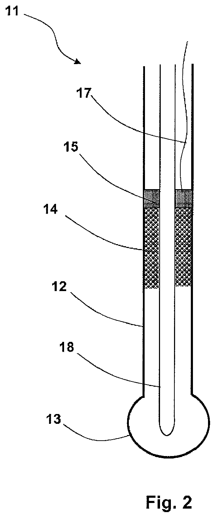

Die in Fig. 2 gezeigte pH-Elektrode 11 umfasst ein zylindrisches Glasrohr 12 dessen unteres Ende mit einer pH-Glasmembran 13 verschlossen ist. Das Glasrohr 12 und die pH-Glasmembran 13 umschließen ein Volumen, das mit einem KCI-haltigen pH-Puffer gefüllt ist.

Zur Ausbildung eines pH-abhängigen Potentials ist ein Potential bildendes Element 14 vorgesehen, welches einen elektrisch leitfähigen, offenporigen und elastischen Ringstopfen umfasst, dessen Poren zumindest teilweise AgCI-Partikel enthalten, die von dem Elektrolyten bzw. pH-Puffer benetzt werden. Der Ringstopfen kann beispielsweise ein durch Silberpartikel bzw. durch Partikel mit Silberoberfläche elektrisch leitfähig gemachtes Elastomer umfassen, wobei der Ringstopfen beispielsweise durch radialen Klemmsitz axial fixiert sein kann.

Das Verschlusselement 15 umfasst in dieser Ausgestaltung eine elektrisch leitende Dichtmasse die ein mit Silberpartikeln versetztes Elastomer umfasst, welches unter elektrischer Kontaktierung des Ringstopfens 14 mittels einer geeigneten Dosiervorrichtung in das Glasrohr gegossen ist.

Zum Ableiten des pH-abhängigen Potentials ist ein Ende eines Ableitdrahtes 17 in das Verschlusselement 15 eingegossen, ohne dieses jedoch vollständig zu durchdringen. Wahlweise kann das Ende des Ableitdrahtes auch nach dem Aushärten des Elastomers mit einer Oberfläche des Verschlusselements verklebt sein.

Entlang der Achse der pH-Elektrode verläuft ein Glasschaft eines Temperaturfühlers 18, welcher die Temperatur der des pH-Puffers etwa im Zentrum des von der pH-Glasmembran eingeschlossenen Volumens erfasst. Aufgrund dieses Temperaturfühlers sind der Ringstopfen 14 des Potential bildenden Elements und das Verschlusselement 15 ringförmig gestaltet. Wenn der Temperaturfühler entfällt, ist stattdessen ein massiver Stopfen für das Potential bildende Element vorzusehen, und das Verschlusselement 15 ist dementsprechend vollflächig in dem Glasrohr zu vergießen.

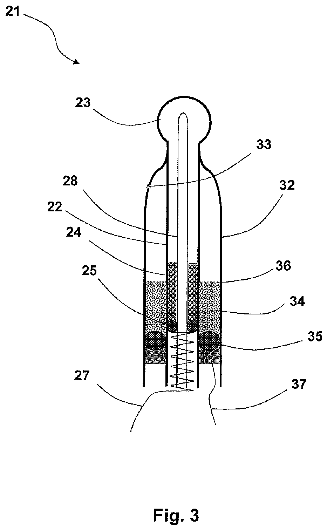

Fig. 3 zeigt schließlich eine Einstabmesskette 21 mit einer erfindungsgemäßen pH-Elektrode, die auch für die Überkopfmontage, also mit der pH-Glasmembran nach oben, geeignet ist. In diesem Fall ist eine vollständige Befüllung der Glasrohre für den pH-Puffer bzw. den Referenzelektrolyten von herausragender Bedeutung, weil im Falle einer unvollständigen Befüllung beispielsweise die Innenwand der pH-Glasmembran nicht mehr benetzt und die Messstrecke somit unterbrochen wäre.

Die pH-Elektrode der Einstabmesskette 21 umfasst ein zylindrisches Glasrohr 22 dessen oberes Ende mit einer pH-Glasmembran 23 verschlossen ist. Das Glasrohr 22 und die pH-Glasmembran 23 umschließen ein Volumen, das vollständig mit einem KCI-haltigen pH-Puffer gefüllt ist.

Zur Ausbildung eines pH-abhängigen Potentials ist ein Potential bildendes Element 24 vorgesehen, welches einen elektrisch leitfähigen, offenporigen und elastischen Ringstopfen umfasst, dessen Poren zumindest teilweise AgCI-Partikeln enthalten, die von dem pH-Puffer benetzt werden. Der Ringstopfen kann beispielsweise ein durch Silberpartikel bzw. durch Partikel mit Silberoberfläche elektrisch leitfähig gemachtes Elastomer umfassen, wobei der Ringstopfen beispielsweise durch radialen Klemmsitz axial fixiert ist.

An den Ringstopfen grenzt in elektrisch leitendem Kontakt ein Verschlusselement 25 an, welches das mit dem pH-Puffer und dem potential bildenden Element 24 gefüllte Volumen dicht abschließt.

Das Verschlusselement 25 umfasst in dieser Ausgestaltung einen elektrisch leitenden O-Ring der ein mit Silberpartikeln oder silberhaltigen Partikeln versetztes Elastomer aufweist. Der O-Ring ist durch die radialen Einspannkräfte ausreichend in axialer Richtung fixiert.

Zum Ableiten des pH-abhängigen Potentials wird der O-Ring über eine Kontaktfeder 27 kontaktiert, die gegen die dem Potential bildenden Element 24 abgewandte Stirnseite des O-Rings drückt. Die Kontaktfeder 27 ist dabei so weit axial vorgespannt, dass ein elektrischer Kontakt auch bei Erschütterungen und Temperaturschwankungen bestehen bleibt, aber dass keine axiale Verschiebung des O-Rings 25 durch die Kontaktfeder erfolgt.

Entlang der Achse der pH-Elektrode verläuft ein Glasschaft eines Temperaturfühlers 28, welcher die Temperatur der des pH-Puffers etwa im Zentrum des von der pH-Glasmembran 23 eingeschlossenen Volumens erfasst.

Das Glasrohr 22 der pH-Elekrode ist koaxial von einem zweiten Glasrohr 32 umgeben, so dass zwischen den beiden Glasrohren eine Ringkammer gebildet wird, die mit einem Referenzelektrolyten gefüllt ist, der eine 3 molare KCI-Lösung umfasst.

Das zweite Glasrohr 32 ist in einem axialen Endabschnitt, der an die axiale Position der pH-Glasmembran anschließt mit dem Glasrohr 22 der pH-Elektrode verschmolzen, wodurch die Ringkammer an dem mit einem Messmedium beaufschlagbaren Endbereich verschlossen ist. In diesem Endbereich weist das Äußere Glasrohr weiterhin ein poröses Keramikdiaphragma auf, durch welches eine Elektrolytbrücke zum Messmedium realisiert wird.

Zur Ausbildung eines Referenzpotentials ist in der Ringkammer ein AgCI-Vorrat 34 vorgesehen, der Silberkörner bzw. Körner mit einer Silberoberfläche, insbesondere versilberte Glaskörner, umfasst, die zumindest teilweise chloridiert sind und mit einem Verschlusselement 35, welches den mit dem Referenzelektrolyten gefüllten Abschnitt der Ringkammer zwischen dem ersten Glasrohr 22 und dem zweiten Glasrohr 32 verschließt, in elektrisch leitendem Kontakt stehen.

Zur Fixierung der axialen Position des AgCI-Vorrats 34 ist eine axiale Barriere 36 in der Ringkammer vorgesehen, die für den Referenzelektrolyten durchlässig ist, so dass dieser den AgCI-Vorrat benetzen kann. Die Barriere 36 kann beispielsweise eine ringförmige Siebplatte aus Glas oder Kunststoff umfassen. Das Verschlusselement 35 umfasst in dieser Ausgestaltung einen elektrisch leitenden O-Ring der ein mit Silberpartikeln versetztes Elastomer aufweist. Der O-Ring ist durch die radialen Einspannkräfte ausreichend in axialer Richtung fixiert.

Zum Ableiten des Referenzpotentials ist ein Endabschnitt eines Ableitdrahtes 37 mit einem Leitkleber im elektrischen Kontakt zu dem O-Ring in die Ringkammer eingeklebt, wobei der Leitkleber zudem als zum O-Ring redundante Dichtung zum dienen kann.

Wenngleich die Fig. 3 die Einstabmesskette in einer Überkopf-Anordnung zeigt, betrifft dies lediglich eine vorteilhafte Anwendung der Erfindung, selbstverständlich sind Messanordnungen mit beliebigen anderen Ausrichtungen der Elektroden von der Erfindung umfasst.

## Patentansprüche

1. Elektrode (1, 11), umfassend:
mindestens einen ersten vorzugsweise zylindrischen Glaskörper (2, 12, 22), in dem mindestens eine erste Kammer ausgebildet ist,
mindestens einen ersten Elektrolyten, der in der ersten Kammer angeordnet ist,
mindestens ein erstes Potential bildendes Element (4, 14, 24), welches in der Kammer angeordnet ist, und unter Kontaktierung des ersten Elektrolyten ein erstes Potential ausbildet,
mindestens ein erstes Verschlusselement (5,15, 25), welches in der ersten Kammer unter Einschluss des ersten Elektrolyten und des ersten Potential bildenden Elements axial fixiert ist und diese dicht verschließt, **dadurch gekennzeichnet, dass** das erste Verschlusselement (5, 15, 25) leitfähig ist,
das Verschlusselement (5, 15, 25) einen leitfähigen Verschlusskörper umfasst, der ein Elastomer aufweist,
das erste Potential bildende Element (4, 14, 24) das erste Verschlusselement (5, 15, 25) leitend kontaktiert, und
die Elektrode (1, 11) weiterhin mindestens einen ersten elektrischen Leiter (7, 17, 27) umfasst, welcher das erste Verschlusselement (5, 15, 25) auf der dem ersten Elektrolyten abgewandten Seite des ersten Verschlusselements (5,15, 25) elektrisch kontaktiert.

2. Elektrode (1, 11) nach Anspruch 1,
wobei das erste Potential bildende Element (4, 14, 24) einen AgCI-Vorrat umfasst, der von dem Elektrolyten benetzt wird und in elektrisch leitender Verbindung mit dem elektrisch leitenden Verschlusselement (5, 15, 25) steht.

3. Elektrode (1, 11) nach Anspruch 2,
wobei das erste Potential bildende Element (4, 14, 24) einen leitfähigen Elementkörper umfasst, der ein poröses Elastomer aufweist, und der das Verschlusselement (5, 15, 25) kontaktiert.

4. Elektrode (1, 11) nach Anspruch 3,
wobei die Poren des leitfähigen Elementkörpers den Elektrolyten und AgCl enthalten.

5. Elektrode (1, 11) nach Anspruch 3 oder 4,
wobei das Elastomer des Elementkörpers eingebettete Silberpartikel, silberhaltige Partikel, oder mit Ag beschichtete Glaspartikel aufweist.

6. Elektrode (1, 11) nach Anspruch 1,
wobei das Elastomer des Verschlusskörpers eingebettete Silberpartikel, silberhaltige Partikel, oder mit Ag beschichtete Glaspartikel aufweist.

7. Elektrode (1, 11) nach Anspruch 1 oder 6,
wobei der Verschlusskörper in die Öffnung des Glaskörpers (2, 12, 22) eingepresst ist, und das Verschlusselement (5, 15, 25) durch radiale Einspannkräfte im Klemmsitz in seiner axialen Position fixiert ist.

8. Elektrode (1, 11) nach Anspruch 3,
wobei der Elementkörper einstückig mit dem Verschlusskörper ausgebildet ist.

9. Elektrode (1, 11) nach einem der Ansprüche 1 bis 5,
wobei das Verschlusselement (5, 15, 25) einen leitfähigen Klebstoff umfasst.

10. Elektrode (1, 11) nach Anspruch 9,
wobei der Klebstoff eingebettete Silberpartikel, silberhaltige Partikel, oder mit Ag beschichtete Glaspartikel aufweist.

11. Elektrode (1, 11) nach einem der vorhergehenden Ansprüche,
wobei die Elektrode (1, 11) eine pH-Elektrode ist.

12. Elektrode (1, 11) nach Anspruch 11,
wobei ein erstes axiales Ende des Glaskörpers (2, 12, 22) unter Bildung der ersten Kammer mit einer pH-Glasmembran (3, 13, 23) verschlossen ist, und der erste Elektrolyt einen pH-Puffer umfasst.

13. Elektrode (1, 11) nach einem der Ansprüche 1 bis 10,
wobei die Elektrode (1, 11) eine Referenzelektrode umfasst und ein Referenzelektrolyt in der Kammer angeordnet ist.

14. Elektrode (1, 11) nach Anspruch 13,
wobei der Referenzelektrolyt eine KCl-Lösung umfasst.

15. Elektrode (1, 11) nach Anspruch 13 oder 14,
wobei in einem Endabschnitt des zylindrischen Glaskörpers (2, 12, 22) ein poröses Diaphragma angeordnet ist.

16. Einstabmesskette (21), umfassend
eine pH-Elektrode und
eine Referenzelektrode, wobei
die pH-Elektrode und die Referenzelektrode jeweils einen zylindrischen Glaskörper aufweisen und der Glaskörper der Referenzelektrode den Glaskörper der pH-Elektrode unter Ausbildung einer Ringkammer umschließt, wobei die pH-Elektrode eine Elektrode gemäß Anspruch 11 ist und/oder die Referenzelektrode eine Elektrode gemäß Anspruch 13 ist.

## Claims

1. Electrode (1, 11) comprising:
at least a first glass body (2, 12, 22), preferably cylindrical, in which at least one chamber is formed,
at least a first electrolyte, which is arranged in the first chamber,
at least one element (4, 14, 24) forming a first potential, said element being arranged in the chamber, and forming a first potential when coming into contact with the first electrolyte,
at least a first sealing element (5, 15, 25), which is axially fixed in the first chamber including the first electrolyte and the element forming the first potential, and which seals said chamber in a tight manner,
**characterized in that**
the first sealing element (5, 15, 25) is conductive,
the sealing element (5, 15, 25) comprises a conductive sealing body that has an elastomer,
the element (4, 14, 24) forming the first potential establishes a conductive contact with the first sealing element (5, 15, 25), and
the electrode (1, 11) further comprises at least a first electrical conductor (7, 17, 27), which establishes an electrical contact with the first sealing element (5, 15, 25) on the side of the first sealing element (5, 15, 25) facing away from the first electrolyte.

2. Electrode (1, 11) as claimed in Claim 1,
wherein the element (4, 14, 24) forming the first potential comprises an AgCl reserve, which is wetted by the electrolyte and is in electrically conductive contact with the electrically conductive sealing element (5, 15, 25).

3. Electrode (1, 11) as claimed in Claim 2,
wherein the element (4, 14, 24) forming the first potential comprises a conductive element body, which has a porous elastomer, and which establishes contact with the sealing element (5, 15, 25).

4. Electrode (1, 11) as claimed in Claim 3,
wherein the pores of the conductive element body contain the electrolyte and the AgCl reserve.

5. Electrode (1, 11) as claimed in Claim 3 or 4,
wherein the elastomer of the element body features embedded silver particles, particles containing silver, or glass particles coated in Ag.

6. Electrode (1, 11) as claimed in Claim 1,
wherein the elastomer of the sealing body features embedded silver particles, particles containing silver, or glass particles coated in Ag.

7. Electrode (1, 11) as claimed in Claim 1 or 6,
wherein the sealing body is pressed into the opening of the glass body (2, 12, 22) and the sealing element (5, 15, 25) is fixed in its axial position by radial clamping forces in the clamping seat.

8. Electrode (1, 11) as claimed in Claim 3,
wherein the element body is formed as a single piece with the sealing body.

9. Electrode (1, 11) as claimed in Claims 1 to 5,
wherein the sealing element (5, 15, 25) comprises a conductive adhesive.

10. Electrode (1, 11) as claimed in Claim 9,
wherein the adhesive features embedded silver particles, particles containing silver, or glass particles coated in Ag.

11. Electrode (1, 11) as claimed in one of the previous claims,
wherein the electrode (1, 11) is a pH electrode.

12. Electrode (1, 11) as claimed in Claim 11,
wherein a first axial end of the glass body (2, 12, 22) is sealed with a glass pH membrane (3, 13, 23) in forming the first chamber, and wherein the first electrolyte comprises a pH buffer.

13. Electrode (1, 11) as claimed in one of the Claims 1 to 10,
wherein the electrode (1, 11) comprises a reference electrode and a reference electrolyte is arranged in the chamber.

14. Electrode (1, 11) as claimed in Claim 13,
wherein the reference electrolyte comprises a KCI solution.

15. Electrode (1, 11) as claimed in Claim 13 or 14,
wherein a porous diaphragm is arranged in an end section of the cylindrical glass body (2, 12, 22).

16. Combination electrode (21), comprising
a pH electrode and
a reference electrode,
wherein the pH electrode and the reference electrode each has a cylindrical glass body and the glass body of the reference electrode surrounds the glass body of the pH electrode in forming an annular chamber, wherein the pH electrode is an electrode according to Claim 11 and/or the reference electrode is an electrode according to Claim 13.

## Revendications

1. Électrode (1, 11) comprenant :
au moins un premier corps de verre (2, 12, 22) de préférence cylindrique,
dans lequel est formé au moins une chambre,
au moins un premier électrolyte, lequel est disposé dans la première chambre,
au moins un élément (4, 14, 24) formant un premier potentiel, lequel élément est disposé dans la chambre et qui, en entrant en contact avec le premier électrolyte, forme un premier potentiel,
au moins un élément de fermeture (5, 15, 25), qui est fixé axialement dans la première chambre incluant le premier électrolyte et l'élément formant le premier potentiel, et qui obture ces derniers de façon étanche,
**caractérisée**
**en ce que** le premier élément de fermeture (5, 15, 25) est conducteur,
**en ce que** l'élément de fermeture (5, 15, 25) comprend un corps de fermeture conducteur, qui comporte un élastomère,
**en ce que** l'élément (4, 14, 24) formant le premier potentiel établit un contact conducteur avec le premier élément de fermeture (5, 15, 25), et
**en ce que** l'électrode (1, 11) comprend en outre un premier conducteur électrique (7, 17, 27), qui établit un contact électrique avec le premier élément de fermeture (5, 15, 25) sur le côté opposé au premier électrolyte du premier élément de fermeture (5, 15, 25).

2. Électrode (1, 11) selon la revendication 1,
pour laquelle le premier élément (4, 14, 24) formant le premier potentiel comprend une réserve AgCl, qui est mouillée avec un électrolyte et est en liaison électrique avec l'élément de fermeture (5, 15, 25) électroconducteur.

3. Électrode (1, 11) selon la revendication 2,
pour laquelle le premier élément (4, 14, 24) formant le potentiel comprend un corps d'élément présentant un élastomère poreux, et qui établit un contact avec l'élément de fermeture (5, 15, 25).

4. Électrode (1, 11) selon la revendication 3,
pour laquelle les pores du corps d'élément conducteur contiennent l'électrolyte et la réserve d'AgCl.

5. Électrode (1, 11) selon la revendication 3 ou 4,
pour laquelle l'élastomère du corps d'élément contient des particules d'argent incorporées, des particules argentifères ou des particules de verre revêtues d'Ag.

6. Électrode (1, 11) selon la revendication 1,
pour laquelle l'élastomère du corps de fermeture contient des particules d'argent incorporées, des particules argentifères ou des particules de verre revêtues d'Ag.

7. Électrode (1, 11) selon la revendication 1 ou 6,
pour laquelle le corps de fermeture est pressé dans l'ouverture du corps de verre (2, 12, 22) et l'élément de fermeture (5, 15, 25) est fixé dans sa position axiale par les forces de serrage radiales générées par l'ajustement serré.

8. Électrode (1, 11) selon la revendication 3,
pour laquelle le corps d'élément est formé d'un seul tenant avec le corps de fermeture.

9. Électrode (1, 11) selon l'une des revendications 1 à 5,
pour laquelle l'élément de fermeture (5, 15, 25) comprend une colle conductrice.

10. Électrode (1, 11) selon la revendication 9,
pour laquelle la colle contient des particules d'argent incorporées, des particules argentifères ou des particules de verre revêtues d'Ag.

11. Électrode (1, 11) selon l'une des revendications précédentes,
pour laquelle l'électrode (1, 11) est une électrode pH.

12. Électrode (1, 11) selon la revendication 11,
pour laquelle une première extrémité axiale du corps de verre (2, 12, 22) est fermée avec une membrane de verre pH (3, 13, 23) en formant la première chambre, et pour laquelle le premier électrolyte comprend un tampon de pH.

13. Électrode (1, 11) selon l'une des revendications 1 à 10,
pour laquelle l'électrode (1, 11) comprend une électrode de référence et un électrolyte de référence est disposé dans la chambre.

14. Électrode (1, 11) selon la revendication 13,
pour laquelle l'électrolyte de référence est une solution de KCI.

15. Électrode (1, 11) selon la revendication 13 ou 14,
pour laquelle un diaphragme poreux est disposé dans une partie d'extrémité du corps de verre cylindrique (2, 12, 22).

16. Électrode combinée (21), comprenant
une électrode pH et
une électrode de référence,
l'électrode pH et l'électrode de référence comportant chacune un corps de verre cylindrique et le corps de verre de l'électrode de référence renfermant le corps de verre de l'électrode pH en formant une chambre annulaire, l'électrode pH étant une électrode selon la revendication 11 et/ou l'électrode de référence étant une électrode selon la revendication 13.
